# EUROPÄISCHE PATENTSCHRIFT

(11) **EP 0 699 464 B1**
(45) Veröffentlichungstag und Bekanntmachung des Hinweises auf die Patenterteilung: **14.02.2001**
(21) Anmeldenummer: 95107886.4
(22) Anmeldetag: 24.05.1995
(51) Int. Cl.: B01D 29/11, B01D 29/96, B01D 35/153, B01D 29/15, B01D 35/16

(54) **Filter, insbesondere zum Reinigen von Schmieröl einer Brennkraftmaschine**
Filter, especially for purifying lubricating oil of an internal combustion enginge
Filtre, notamment pour la purification d'huile de lubrification d'un moteur à combustion interne

(30) Priorität: 13.08.1994 DE 4428771
(43) Veröffentlichungstag der Anmeldung: 06.03.1996
(73) Patentinhaber: FILTERWERK MANN & HUMMEL GMBH, 71631 Ludwigsburg (DE)
(72) Erfinder: Ernst, Volker, D-74343 Sachsenheim (DE); Klotz, Arthur, D-71686 Remseck (DE); Leipelt, Rudolf, D-71612 Marbach (DE)
(74) Vertreter: Voth, Gerhard, Dipl.-Ing.

(56) Entgegenhaltungen:
- EP-A- 0 314 915
- EP-A- 0 612 549
- EP-A- 0 653 234
- DE-B- 2 555 420
- FR-A- 2 332 786

## Beschreibung

Die Erfindung betrifft ein Filter, insbesondere zum Reinigen von Schmieröl einer Brennkraftmaschine nach dem Oberbegriff des Hauptanspruchs.

Aus der DE-C 25 55 420 ist ein Filter bekannt, bei dem ein Filtergehäuse zur Aufnahme wenigstens eines Filtereinsatzes vorgesehen ist. Das Filtergehäuse weist eine geodätische obere Montageöffnung zum Einsetzen und Auswechseln des Filtereinsatzes auf. Im geodätisch unteren Boden sind die Anschlüsse für Reinöl und Schmutzöl sowie ein dritter Anschluß als Ablaßverbindung angeordnet. Die Ablaßverbindung wird mit einer Mittelschraube, welche durch den Filtereinsatz verläuft und einen Deckel auf der Montageöffnung fixiert, verschlossen. Zum Austausch des Filtereinsatzes ist es erforderlich, den Deckel zu öffnen. Hierzu wird zunächst die Mittelschraube herausgedreht und anschließend der Deckel entfernt. Nachdem die Mittelschraube aus der Ablaßverbindung herausgedreht ist, läuft das in dem Filtergehäuse befindliche Öl über diese Ablaßverbindung ab.

Dieses System hat sich zwar bei den bislang gebräuchlichen Aluminiumdruckgußgehäusen und -deckeln bewährt. Im Zuge der Material- und Kostenreduzierung wird jedoch zunehmend Kunststoff als Werkstoff bei Filtern verwendet. Bei der Verwendung von Kunststoff für den Deckel oder auch für das Filtergehäuse ist eine Mittelschraube nicht mehr erforderlich.

Nachteilig bei dem bekannten System war auch das beim Öffnen des Filters sehr spät erfolgende Ablaufen des Öles. Erst wenn die Mittelschraube vollständig aus dem Gegengewinde entfernt war, konnte das Öl ablaufen. Bei einer schnellen Entnahme des Deckels war deshalb nicht immer sichergestellt, daß bereits genügend Öl abgelaufen war, wenn der Deckel abgenommen wurde.

EP 0314915 A offenbart auch ein Schmierölfilter, wobei die Betätigung des Bodenablaufventils über einen Filtereinsatz erreicht wird. Beim Entfernen des Deckels wird der Filtereinsatz nach oben abgehoben; damit öffnet sich das Bodenablaufventil. Bei diesem Filter wird ein Filtereinsatz aus einem bestimmten Grund nicht eingebaut, beispielweise in einer Notsituation; wenn kein Filtereinsatz vorhanden ist, dann läßt sich das Bodenablaufventil nicht schließen, damit sich auch kein Öldruck aufbaut und die Brennkraffmaschine nicht betriebsfähig ist.

Der Erfindung liegt deshalb die Aufgabe zugrunde, ein Filter, insbesondere zum Reinigen von Schmieröl, ohne die obengenannten Nachteile des Stands der Technik, zu schaffen.

Diese Aufgabe wird ausgehend von dem Oberbegriff des Hauptanspruchs durch dessen kennzeichnenden Merkmale gelöst.

Der wesentliche Vorteil der Erfindung ist darin zu sehen, daß der Deckel einen Schieber steuert, der der Verschluß der Ölablaßöffnung ist. Damit ist in jedem Betriebszustand ein sicherer Betrieb der Brennkraffmaschine gewährleistet. Auch wird das Bodenablaufventil aufgrund der Steuerung durch den Deckel breits vor dem Abheben des Deckels geöffnet und sorgt damit dafür, daß beim Entfernen des Deckels bereits ein Großteil des im Fitergehäuse befindlichen Öles abgelaufen ist.

Ein weiterer Vorteil der Erfindung ist darin zu sehen, daß keine zusätzlichen Einzelteile, wie z. B. eine Mittelschraube, erforderlich sind. Damit wird die Wartung erheblich vereinfacht.

In einer Ausgestaltung der Erfindung wird vorgeschlagen, den Deckel mit einem mehrgängigen Gewinde zu versehen. Dies hat den Vorteil, daß nur eine einzige Umdrehung erforderlich ist, um das Filtergehäuse zuverlässig zu verschließen.

Es besteht aber auch die Möglichkeit, den Schieber mit einem Zapfen zu versehen, der in eine Nut des Deckels eingreift, so daß eine Zwangsführung erfolgt. Sofern eine Zwangsführung nicht gegeben ist, kann der Schieber mit einer Feder versehen sein, die auf den Schieber eine Kraft ausübt, die entgegengerichtet der durch den Deckel ausgeübten Kraft ist, so daß beim Abnehmen des Deckels sich der Schieber nach oben bewegt und damit die Ölablaßbohrung freigibt.

Eine weitere Ausgestaltung der Erfindung sieht vor, den Verschluß des Bodenablaufventils als einen axialtoleranten Verschluß auszugestalten. Dies bedeutet, daß Toleranzen des Deckels oder des Schiebers sich nicht auf die Funktionsfähigkeit des Ventils auswirken. Hierzu weist das Bodenablaufventil eine bestimmte Dichtlänge auf. Innerhalb dieser Dichtlänge kann ein Dichtwulst, beispielsweise ein O-Ring des Schiebers, positioniert sein.

Gemäß einer weiteren Ausgestaltung der Erfindung ist vorgesehen, den Schieber mit einem Rastelement auszustatten, welches in der Offenstellung einrastet. Damit ist gewährleistet, daß der Schieber in der Offenstellung eine Sollposition einnimmt.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand von Ausführungsbeispielen näher erläutert. Es zeigt:
Figur 1 die Schnittdarstellung eines Verschlußschiebers,
Figur 1a - e Detaildarstellungen eines Verschlußschiebers,
Figur 2 eine Variante eines Verschlußschiebers,
Figur 3 eine weitere Variante bei einem Deckel mit Außengewinde,
Figur 4 eine integrierte Deckel-Schieber-Lösung.

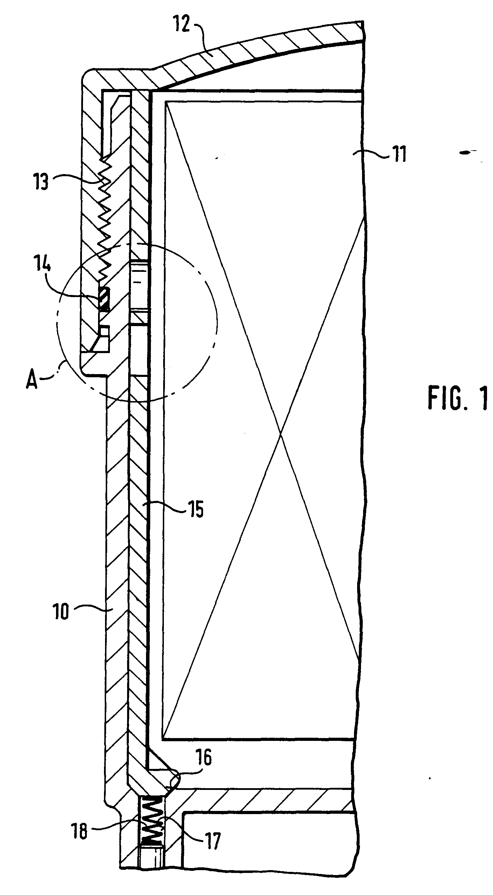

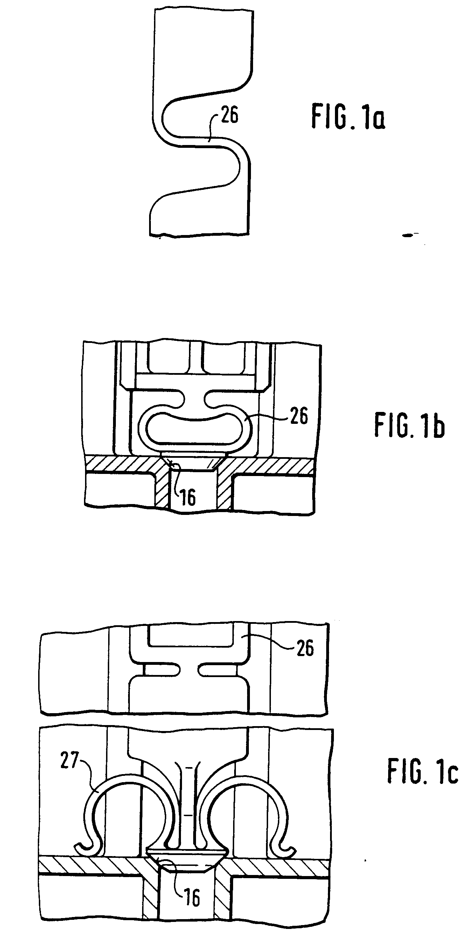

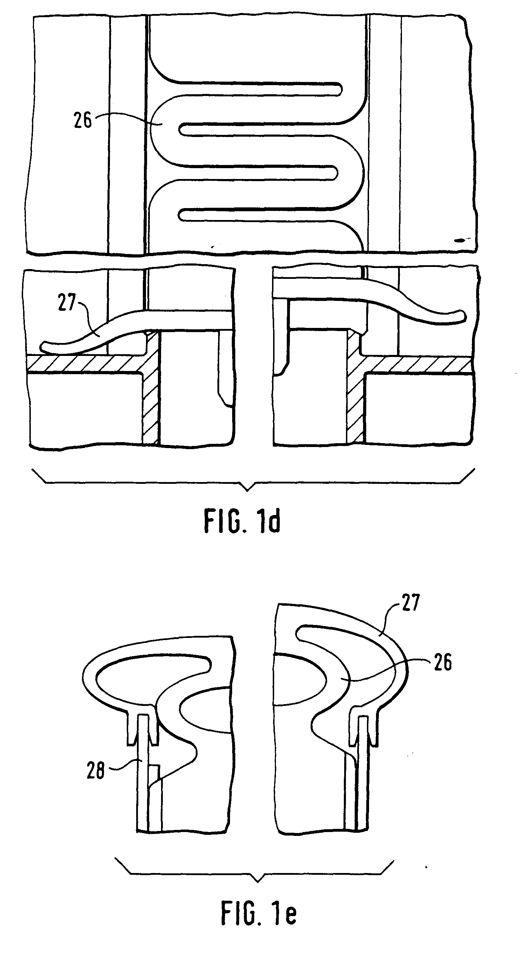

Die Schnittdarstellung eines Verschlußschiebers gemäß Figur 1 zeigt ein Filtergehäuse 10, in welchem sich ein Filtereinsatz 11 befindet. Das Filtergehäuse ist am oberen Ende mit einem Deckel 12 verschlossen. Zur Abdichtung von Deckel und Filtergehäuse ist im Bereich des Gewindes 13 ein Dichtring 14 vorgesehen.

An dem Deckel 12 stützt sich ein Schieber 15 ab. Dieser Schieber ist axial beweglich an dem Filtergehäuse 10 gelagert. Der Schieber ist am unteren Ende mit einem Ventilsitz 16 ausgestattet. Dieser Ventilsitz verschließt im Betriebszustand eine Ölablaßöffnung 17. Sobald der Deckel von dem Filtergehäuse 10 abgeschraubt wird, bewegt sich der Schieber 15 aufgrund der Kraft der Druckfeder 17 nach oben und gibt damit die Ölablaßöffnung frei, so daß das im Filtergehäuse befindliche Öl ablaufen kann. Nachdem der Deckel abgehoben ist, kann der Filtereinsatz 11 entfernt und durch einen neuen Filtereinsatz ersetzt werden. Zum Ausgleich der Axialtoleranzen des Schiebers 15 in der Ventilstellung "zu" ist ein elastisches Element erforderlich. Dieses kann eine im Schieber 15 integrierte Schraubenfeder oder ein am Schieber angeformter Bügel oder Schenkel sein.

Figur 1a zeigt das Detail A eines Verschlußschiebers. In diesem Detail ist eine Überdehnfeder 26 dargestellt. Diese hat die Aufgabe, Längentoleranzen des Verschlußschiebers auszugleichen. Die Überdehnfeder besteht üblicherweise aus dem Material des Verschlußschiebers. Selbstverständlich ist es auch möglich, hier eine metallische Überdehnfeder einzusetzen.

Eine Variante einer solchen Feder zeigt Figur 1b. Hier ist diese Überdehnfeder 26 unmittelbar am Ventilsitz 16 angeordnet.

In Figur 1c ist eine Kombination einer Überdehnfeder 26 mit einer Rückholfeder 27 dargestellt. Die Rückholfeder 27 ist im Bereich des Ventilsitzes 16 vorgesehen. Die Überdehnfeder befindet sich im Stegbereich des Verschlußschiebers.

Eine weitere Variante zeigt Figur 1d. Auch dort ist eine Rückholfeder 27 angeordnet. Diese bildet gleichzeitig den Verschluß für die Ablauföffnung.

Eine Kombination von Überdehnfeder und Rückholfeder zeigt Figur 1e. Die Überdehnfeder 26 ist im mittleren Bereich angeordnet. Die Rückholfeder 27 stützt sich an einer Gehäusestruktur 28 ab und übt eine nach oben gerichtete Kraft auf den Verschlußschieber aus. Im linken Halbschnitt ist die Geschlossenstellung gezeigt, im rechten Halbschnitt die Offenstellung des Verschlußschiebers

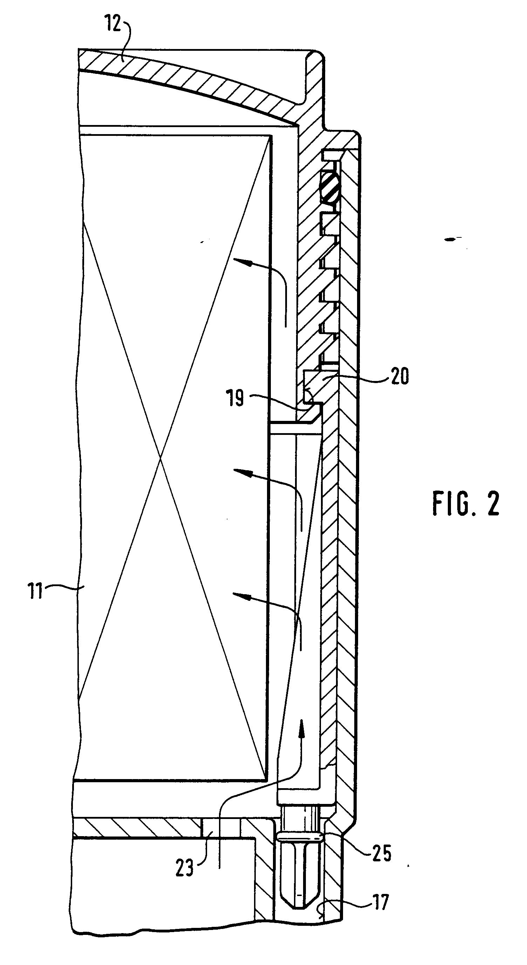

Die in Figur 2 dargestellte Variante eines Verschlußschiebers zeigt einen zwangsgeführten Schieber. Dieser verschließt ebenfalls eine Ölablaßöffnung 17, wobei hier ein axialtolerantes Dichtelement vorgesehen ist. Die Ölablaßöffnung 17 ist mit einer Dichtfläche versehen, die sich über eine gewisse axiale Länge erstreckt. An dem Schieber ist ein O-Ring 25 befestigt. Dieser O-Ring 25 dichtet im hier dargestellten geschlossenen Zustand die Ölablaßöffnung 17 ab.

Im Deckel 12 ist, wie in der Abwicklung gezeigt, eine Nut 19 angeordnet. In diese Nut greift ein Zapfen 20 des Schiebers ein, so daß der Schieber mit der Axialbewegung des Deckels geführt wird. In der hier gezeigten, geschlossenen Stellung, die in der Abwicklung der 360°-Stellung entspricht, ist die Ölablaßöffnung verschlossen. Sobald der Deckel gedreht wird, bewegt sich der Schieber aufgrund der Gewindesteigung - es handelt sich hier um ein viergängiges Gewinde - nach oben und gibt die Ölablaßöffnung frei. Ab der 180°-Stellung verläuft die Nut nicht mehr parallel zu der Horizontal-Ebene, sondern parallel zu dem Gewinde. Auf dieser Schräge führt der Schieber keine Axialbewegung mehr aus, sondern verharrt in der damit erreichten Offenstellung. Ab der 90°-Stellung kann der Deckel abgenommen werden. Das im Filtergehäuse befindliche Öl ist während des Öffnungsvorgangs des Deckels abgelaufen. In der Offenstellung des Schiebers kann ein Rastelement dafür sorgen, daß der Schieber in dieser Stellung verharrt, bis der Deckel wieder aufgesetzt und der Zapfen 20 des Schiebers in die Nut 19 eingreift.

Damit der Deckel bezüglich des Schiebers richtig positioniert aufgesetzt wird, kann das viergängige Gewinde mit unterschiedlichen Ganggeometrien ausgestattet sein, d. h. sofern ein Gewindegang ein stärkeres Profil als die drei weiteren Gewindegänge aufweist, ist gewährleistet, daß der Deckel nur in einer einzigen Bezugsposition zu dem Filtergehäuse auf dieses aufgesetzt werden kann.

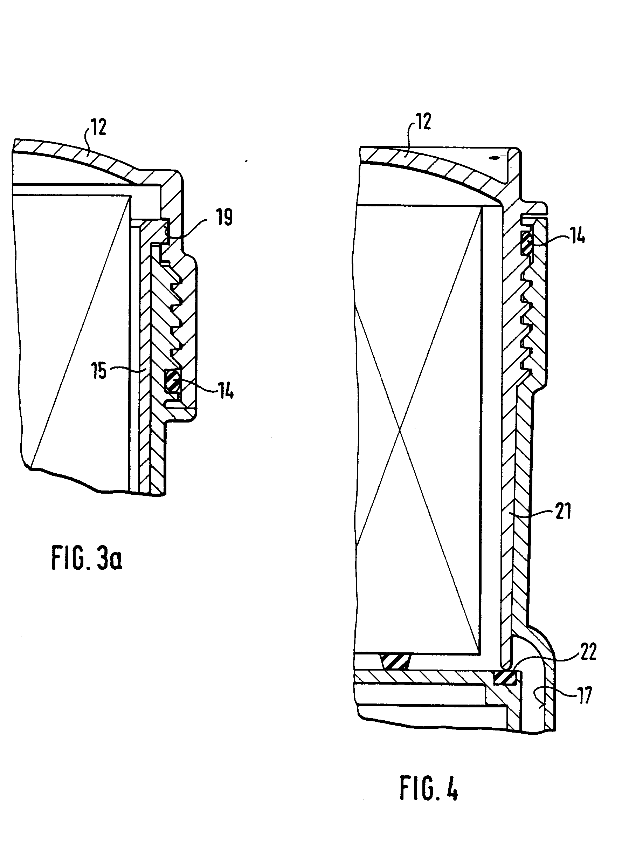

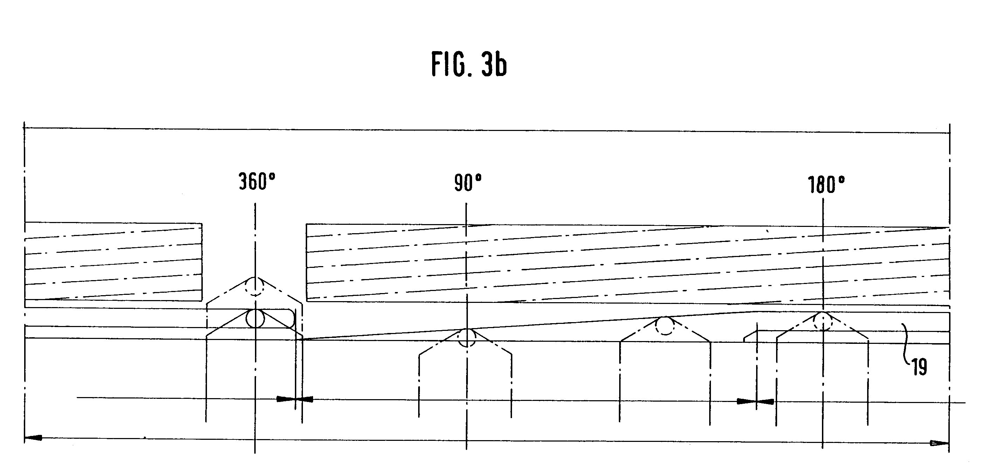

Figur 3 zeigt eine weitere Variante bei einem Deckel mit Außengewinde. Hier greift der Schieber 15 im oberen Bereich des Deckels 12 in eine Nut 19 ein und wird ebenfalls aufgrund der Deckelbewegung axial verschoben.

Eine besonders einfache Lösung zeigt Figur 4. Hier ist der Schieber kein Einzelelement, sondern direkt an dem Deckel angeordnet, d. h. der Schieber ist eine Verlängerung 21 des Deckels 12. Diese Verlängerung verschließt eine Ölablaßöffnung 17 im Bodenbereich des Filtergehäuses. Sobald der Deckel gedreht wird, öffnet sich diese Ölablaßöffnung, so daß das Öl abströmen kann. Zweckmäßigerweise befindet sich unterhalb der Ölablaßöffnung ein Dichtelement 22, so daß eine zuverlässige Abdichtung der Ölablaßöffnung erfolgt.

Wie in den vorangegangenen Ausführungsbeispielen ist dem Gewinde unmittelbar benachbart ein Dichtring 14 vorgesehen. Sobald der

Deckel geöffnet wird, gibt der Dichtring 14 den Weg für einströmende Luft über das Gewinde frei, so daß der Ablauf des Öls sichergestellt ist.

## Patentansprüche

1. Filter, insbesondere zum Reinigen von Schmieröl einer Brennkraftmaschine, mit einem Filtergehäuse (10) zur Aufnahme wenigstens eines Filtereinsatzes (11) mit einer in Einbaulage des Filtergehäuses (10) geodätisch oberen Montageöffnung zum Einsetzen und Auswechseln des Filtereinsatzes (11) und einem geodätisch im wesentlichen unteren Boden, wobei der Gehäuseinnenraum durch zwei getrennte, in dem Boden verlaufende Gehäusekanäle mit je einem Gehäuseanschluß (23, 24) für die Zufuhr von Rohflüssigkeit und die Ableitung von Reinflüssigkeit verbunden ist, und wobei im Gehäuseinnenraum eine mit einem Verschluß versehene Ablaßöffnung (17) über den die obere Montageöffnung verschließenden Deckel (12) steuerbar ist, dadurch gekennzeichnet, daß der Verschluß der Ölablaßöffnung (17) ein Schieber (15) ist, der sich am Deckel abstützt und durch die Axialbewegung des Deckels (12) längs der Filterachse verschoben wird und damit ein Schließen bzw. ein Öffnen der Ölablaßöffnung (17) bewirkt.

2. Filter nach Anspruch 1, dadurch gekennzeichnet, daß der Deckel (12) auf die Montageöffnung aufschraubbar ist und insbesondere mit einem mehrgängigen Gewinde (13) versehen ist.

3. Filter nach Anspruch 1 oder 2, dadurch gekennzeichnet, daß der Schieber (15) über einen Zapfen (20) verfügt, der in eine Nut (19) des Deckels (12) eingreift.

4. Filter nach Anspruch 1 oder 2, dadurch gekennzeichnet, daß der Verschluß eine Feder (18) aufweist, die den Verschluß in die Offenstellung bewegt, sobald der Deckel (12) abgenommen wird.

5. Filter nach einem der vorherigen Ansprüche, dadurch gekennzeichnet, daß der Verschluß ein axialtoleranter Verschluß ist und in Schließstellung eine beliebige Lage innerhalb eines bestimmten Axialbereichs einnehmen kann.

6. Filter nach einem der Ansprüche 1 bis 4, dadurch gekennzeichnet, daß ein Bereich des Deckels (12) unmittelbar als Verschlußelement (21) für die Ölablaßöffnung (17) ausgebildet ist.

7. Filter nach einem der vorherigen Ansprüche, dadurch gekennzeichnet, daß ein Rastelement vorgesehen ist, in welches der Schieber (15) in der Offenstellung einrastet.

8. Filter nach einem der vorherigen Ansprüche, dadurch gekennzeichnet, daß die für den Zapfen (20) des Schiebers erforderliche Nut wenigstens zwei voneinander unterschiedliche Steigungen aufweist.

## Claims

1. Filter, more especially for filtering lubricating oil of an internal combustion engine, having a filter housing (10) for the accommodation of at least one filter insert (11), a geodetic upper assembly aperture in the installation position of the filter housing (10) for the insertion and replacement of the filter insert (11), and a substantially geodetic lower base, the housing interior being connected, by two separate housing ducts which extend in the base, to a respective housing connection (23, 24) for the supply of unfiltered fluid and for the discharge of filtered fluid, and an outlet aperture (17), which is provided with a closure, being controllable in the housing interior via the cover (12), which closes the upper assembly aperture, characterised in that the closure of the oil outlet aperture (17) is a slide (15), which is supported on the cover and is slid along the filter axis by the axial displacement of the cover (12) and, in consequence, causes a closure or respectively an opening of the oil outlet aperture (17).

2. Filter according to claim 1, characterised in that the cover (12) is screwable onto the assembly aperture and, more especially, is provided with a multiple thread (13).

3. Filter according to claim 1 or 2, characterised in that the slide (15) has a projection (20) which engages in a groove (19) of the cover (12).

4. Filter according to claim 1 or 2, characterised in that the closure has a spring (18), which displaces the closure into the open position as soon as the cover (12) is removed.

5. Filter according to one of the previous claims, characterised in that the closure is an axially tolerant closure and may assume any desirable position within a predetermined axial range in the closed position.

6. Filter according to one of claims 1 to 4, characterised in that one region of the cover (12) is configured directly as closure means (21) for the oil outlet aperture (17).

7. Filter according to one of the previous claims, characterised in that a locking means is provided, in which the slide (15) engages in the open position.

8. Filter according to one of the previous claims, characterised in that the groove, required for the projection (20) of the slide, has at least two pitches which differ from each other.

## Revendications

1. Filtre notamment pour nettoyer de l'huile de lubrification d'un moteur à combustion interne comprenant un corps de filtre (10) pour recevoir au moins une garniture de filtre (11), un orifice de montage géodésique en position haute par la position de montage du corps de filtre (10) pour mettre en place et échanger la garniture de filtre (11) ainsi qu'un fond en position géodésique basse,
le volume intérieur du corps étant relié par deux canaux distincts, passant dans le fond, chaque fois avec un branchement (23, 24) pour l'alimentation du liquide non nettoyé et pour l'évacuation du liquide nettoyé et
le volume intérieur du corps comportant un orifice de sortie (17) muni d'un moyen de fermeture commandé par le couvercle (12) fermant l'ouverture supérieure de montage,
caractérisé en ce que
le moyen de fermeture de l'orifice de sortie de l'huile (17) est un coulisseau (15) appuyé contre le couvercle et déplacé le long de l'axe du filtre par le mouvement axial du couvercle (12), produisant ainsi la fermeture ou l'ouverture de l'orifice de sortie d'huile (17).

2. Filtre selon la revendication 1,
caractérisé en ce que
le couvercle (12) se visse sur l'orifice de montage et comporte notamment un filetage à plusieurs filets (13).

3. Filtre selon l'une quelconque des revendications 1 ou 2,
caractérisé en ce que
le coulisseau (15) comporte un ergot (20) pénétrant dans une rainure (19) du couvercle (12).

4. Filtre selon l'une quelconque des revendications 1 ou 2,
caractérisé en ce que
le moyen de fermeture comporte un ressort (18) qui déplace le moyen de fermeture en position d'ouverture dès que le couvercle (12) est enlevé.

5. Filtre selon l'une quelconque des revendications précédentes,
caractérisé en ce que
le moyen de fermeture est un moyen ayant une tolérance axiale et, en position de fermeture, il peut prendre n'importe quelle position dans une certaine plage axiale.

6. Filtre selon l'une quelconque des revendications 1 à 4,
caractérisé en ce qu'
une partie du couvercle (12) est réalisé directement comme élément de fermeture (21) pour l'orifice de sortie d'huile (17).

7. Filtre selon l'une quelconque des revendications précédentes,
caractérisé par
un élément d'encliquetage dans lequel s'accroche le coulisseau (15) en position d'ouverture.

8. Filtre selon l'une quelconque des revendications précédentes,
caractérisé en ce que
la rainure nécessaire au téton (20) du coulisseau présente au moins deux pas différents.
